# EUROPEAN PATENT SPECIFICATION

(11) **EP 2 013 300 B1**
(45) Date of publication and mention of the grant of the patent: **08.06.2011**
(21) Application number: 07794426.2
(22) Date of filing: 30.04.2007
(51) Int. Cl.: C09D 11/00

(54) **INK JET INK, INK SET AND METHOD OF PRINTING**
TINTENSTRAHLTINTE, TINTENSATZ UND DRUCKVERFAHREN
ENCRE POUR JET D'ENCRE, ENSEMBLE D'ENCRES ET MÉTHODE D'IMPRESSION

(30) Priority: 02.05.2006 US 796707 P
(43) Date of publication of application: 14.01.2009
(73) Proprietor: E.I. DU PONT DE NEMOURS AND COMPANY, Wilmington, DE 19898 (US)
(72) Inventor: BERGE, Charles, T., Greenville, DE 19807 (US); LI, Xiaoqing, Newark, DE 19711 (US)
(74) Representative: Heinemann, Monica
(86) International application number: PCT/US2007/010425
(87) International publication number: WO 2007/130345

(56) References cited:
- WO-A-01/21714
- US-B1- 6 639 006

## Description

### Cross-Reference to Related Application

This application claims the benefit of U. S. Provisional Application Serial No. 60/796,707 filed on May 2, 2006 which is hereby incorporated by reference in its entirety.

### BACKGROUND OF THE INVENTION

This invention pertains to an inkjet ink comprising a β-hydroxyalkyl amidyl-containing compound, a binder and, optionally, acidic or anhydric ink components as part of the ink or as part of an additional ink in an ink set, and a method of printing with the ink and/or the ink set.

Inkjet recording is a printing method wherein droplets of ink are ejected through fine nozzles to form letters or figures on the surface of recording media. Inks used in such recording are subject to rigorous demands including, for example, good dispersion stability, ejection stability and good fixation to media.

Both dyes and pigments have been used as colorants for inkjet inks. While dyes typically offer superior color properties compared to pigments, they tend to fade quickly and are more prone to rub off. Inks comprising pigments dispersed in aqueous media are advantageously superior to inks using water-soluble dyes in water-fastness and light-fastness of printed images.

Pigments suitable for aqueous inkjet inks are in general well known in the art. Traditionally, pigments are stabilized by dispersing agents, such as polymeric dispersants or surfactants, to produce a stable dispersion of the pigment in the vehicle. Other additives to the ink modify the ink to match the needs for the target printed system, which includes the media.

Digital printing methods such as inkjet printing are becoming increasingly important for many substrates. For the printing of textiles, digital printing methods offer a number of potential benefits over conventional printing methods such as screen printing. Digital printing eliminates the set up expense associated with screen preparation and can potentially enable cost-effective short run production. Inkjet printing furthermore allows visual effects, such as tonal gradients and repeat of printed patterns, that cannot be practically achieved with a screen printing process. Especially in the case of the production of pattern originals it is possible to respond to a change in requirements within a significantly shorter period of time.

Suitable such digital printing systems for textiles are disclosed, for example, in commonly owned U.S. Patent Publication 2003/0128246, U.S. Patent Publication 2003/0160851 and U.S. Patent Application Ser. No. 11/039,019 (filed January 18, 2005). Even as inkjet hardware improvements are made to increase printing speeds, adoption of inkjet printing in the textile industry will be impeded if methods to also improve colorfastness are not found.

EP-A-1 321 493 discloses the use of a branched polyesteramide to enhance the solubility of a colorant.

U.S. Patent No. 5,859,274 discloses the use of hydroxyamide derivatives, especially in conjunction with oxyalkylene, but does not describe the inclusion of binders.

US 6,639,006 describes a ink-jet ink mixture comprising a liquid vehicle, a β-hydroxy alkyl amidyl containing compound and an acrylic polymer. Said reference does not describe the use of a polyurethane binder.

WO 01/21714 describes a inkjet ink composition containing a vehicle, a β-hydroxy alkyl amidyl containing compound and an acrylic polymer. Said document does not describe the use of a polyurethane binder.

A disadvantage of inkjet printing is that there are still needs to improve the durability of the printed substrates. For ink jet printed paper, improved waterfastness, smear resistance and rub resistance require inks that produce more durable printed products. In particular, inkjet-printed fabrics are particularly susceptible to color removal by abrasion and thus have poor durability. Furthermore, another disadvantage of inkjet printing, in particular inkjet printing with pigmented ink, is that inkjet printed fabrics do not tolerate washing conditions required for textiles. The printed colors can lose color intensity upon washing, possibly by removing some of the pigment from the textile. The washed colors can be undesirably transferred to other fabrics in the wash or to the washing machine parts.

There continues to be a need in the art for improved durability of inkjet images on all printed substrates. Improved durability of printed textile, especially in cases where the colorant is pigment, is also needed.

It is thus an object of this invention to provide inks that produce more durable printed products.

### SUMMARY OF THE INVENTION

The present invention provides inks with good stability and jetting characteristics. The printed ink possesses better durability, especially as good smear-resistance, waterfastness, etc.

In accordance with one aspect, the present invention pertains to an inkjet ink composition comprising an ink vehicle having dissolved and/or dispersed therein a polyurethane binder additive and a β-hydroxyalkyl amidyl-containing compound of the formula (I) or (II), 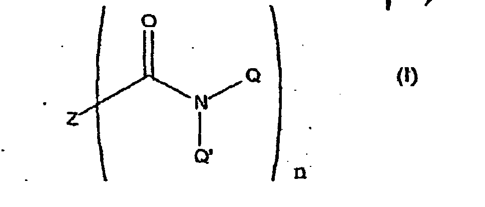 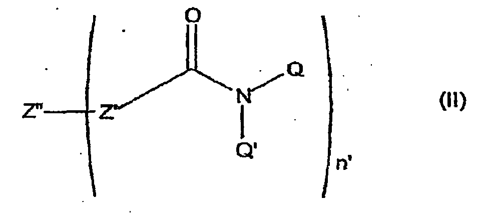 wherein 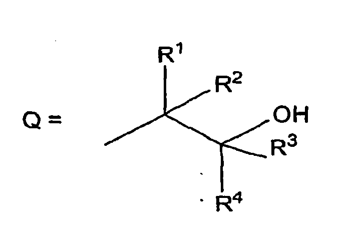 each Q' is individually selected from the group consisting of Q, hydrogen, an alkyl group having from 1 to 5 carbon atoms, and a hydroxyalkyl group having from 1 to 5 carbon atoms (other than Q);
each of R¹, R², R³ and R⁴ is individually selected from the group consisting of hydrogen and an alkyl group having from 1 to 5 carbon atoms, provided that R¹, R², R³ and R⁴ can be bonded pairwise to form a cyclic alkyl having from 5-12 carbon atoms.
For Formula (I)
n is 1 or 2;
when n is 1, Z is selected from the group consisting of NR⁵R⁶, OR⁵ and SR⁵, wherein each of R⁵ and R⁶ is independently selected from the group consisting of hydrogen, Q, an organic radical, such as a saturated, unsaturated, substituted alkyl or aryl containing 1 to 24 carbon atoms; and
when n is 2, Z is a polyvalent organic radical such as derived from a saturated, unsaturated, substituted alkyl or aryl containing 1 to 24 carbon atoms.
For Formula (II)
n' is 2 or greater;
each Z' is independently selected from the group consisting of NR⁵, O and S;
each R⁵ is independently selected from the group consisting of hydrogen, Q, an organic radical such as a saturated, unsaturated, substituted alkyl or aryl containing 1 to 24 carbon atoms and
Z" is selected at least n'-valent organic radical derived from a saturated, unsaturated, substituted alkyl or aryl containing 1 to 24 carbon atoms.

As indicated above, the Z and Z" groups can be optionally substituted. For example, the Z and Z" groups can be substituted with an amidyl group and/or one or more other β-hydroxyalkyl amidyl groups.

The ink comprising polyurethane binder additive and β-hydroxyalkyl amidyl-containing compound can further optionally comprise acidic and/or anhydric components. For example, the binder may be acidic. The inkjet ink may be colored by further comprising a colorant(s), or may not contain a colorant (uncolored). If uncolored, the inkjet ink is preferably substantially clear (so as to not impart any off color to a colored ink in an ink set).

In accordance with another aspect of the present invention, there is provided an ink set comprising at least three differently colored inks, wherein at least one of the inks is an inkjet ink as set forth above, and/or wherein the ink set further comprises another ink which is an non-colored inkjet ink as set forth above.

In accordance with another aspect of the present invention, there is provided another ink set comprising at least two inks, wherein at least one of the inks is an inkjet ink as set forth above, and wherein at least one other ink is a co-reactive aqueous inkjet ink comprising an inkjet vehicle, a binder additive and a co-reactive species containing one or more groups reactive with β-hydroxyalkyl amidyl groups. The preferred co-reactive species are acidic and anhydric species. The polyurethane binder may have co-reactive species.

In yet another aspect of the present invention, there is provided a method for ink jet printing onto a substrate, comprising the steps of:
(a) providing an ink jet printer that is responsive to digital data signals;
(b) loading the printer with a substrate to be printed;
(c) loading the printer with an ink as set forth above and described in further detail below, or an ink jet ink set as set forth above and described in further detail below; and
(d) printing onto the substrate using the ink or inkjet ink set in response to the digital data signals.

In the event that the inkjet ink and/or ink set contains a co-reactive species, the printed substrate can be heated to effect reaction of the β-hydroxyalkyl amidyl groups with the co-reactive species. For example, subsequent to printing, the substrate is preferably heated to at least about 125 °C for at least about 1 minute.

Preferred substrates include textiles, paper and polymeric substrates.

As indicated above, the inks and ink sets in accordance with the present invention are particularly useful as inkjet inks, more particularly as inkjet inks for textile printing. Preferred substrates, therefore, include textiles.

The printed textile can optionally be subject to a fusing process after printing. The fusing process requires exposing the printed textile to a combination of heat and pressure, which has been found to generally improve the durability of the textile, particularly when the colorant is a pigment. In particular, the post treatment combination of heat and pressure has been found to improve wash fastness and stain rating. The pressure can be applied by rolls, platens or the like.

The printed textile can also be baked after printing. The baking process requires exposing the printed textile to heat, which has been found to generally improve the durability of the printed image on the textile, particularly when the colorant is a pigment.

In particular, the post treatment combination of heat and pressure has been found to improve wash fastness and stain rating.

Another aspect of the present invention is an inkjet printed textile inkjet printed with a pigmented inkjet ink, said printed textile having a wash fastness of at least 2.0 (as measured in accordance with AATCC Test Method 61-1996 as the 2A and the 3A test).

These and other features and advantages of the present invention will be more readily understood by those of ordinary skill in the art from a reading of the following detailed description. It is to be appreciated that certain features of the invention which are, for clarity, described above and below in the context of separate embodiments, may also be provided in combination in a single embodiment. Conversely, various features of the invention that are, for brevity, described in the context of a single embodiment, may also be provided separately or in any subcombination. In addition, references in the singular may also include the plural (for example, "a" and "an" may refer to one, or one or more) unless the context specifically states otherwise. Further, reference to values stated in ranges include each and every value within that range.

### DETAILED DESCRIPTION OF THE PREFERRED EMBODIMENTS

By "β-hydroxyalkyl amidyl" compound is meant a compound which has the structural features shown in Formula (I) and Formula (II) above.

The β-hydroxyalkyl amidyl group has at least one hydroxy group in a beta position relative to the nitrogen of an amidyl structure. The Z and Z' group is bonded to the carbonyl of the amidyl, and can be an organic radical or heteroatoms further bonded to at least one hydrogen, Q, or other organic radical. Representative Z and Z' groups include, for example, an alkyl chain which is further bonded to another amidyl with optional β-hydroxy substituents, N (in which case the amidyl would be a urea); O (in which case the amidyl group would be a carbamate or urethane); and S (in which case the amidyl group would be a thiocarbamate or thiourea).

The binder is a polyurethane which is added to the ink formulation. The binder can impart properties to the final printed material that, for example, give greater durability to the printed material. Polymers used as binders in inkjet inks are polyurethane dispersions. The binder may be stabilized in the emulsion by having ionic substituents such as carboxylic acids, sulfur containing acids, amine groups, and other similar ionic groups. Co-stabilizers that are non-ionic in nature, such as those containing polyethyleneoxide, may also be present Alternatively, the binder may be stabilized by external surfactants. In addition, a part of the binder or co-binder may be stabilized non-ionically.

Binders can be soluble or dispersed polymer(s). They can be any suitable polyurethane polymer, for example, soluble polymers may include linear homopolymers, copolymers or block polymers, they also can be structured polymers including graft or branched polymers, stars, dendrimers, etc. The polymers may be made by any known process including but not limited to free radical, group transfer, ionic, RAFT, condensation and other types of polymerization.

While not being limiting, it is contemplated that the binders can contain acidic sites that could chemically interact with β-hydroxyalkyl amidyl groups.

The binder can be used singly or in combination with other binders. The binder is a polyurethane.

The binder when used is preferably present in the ink in an amount of at least about 2 weight percent (solids) based on the total weight of the ink.

The present invention provides inks having a combination of properties particularly suitable for use in inkjet printers. The combination of a β-hydroxyalkyl amidyl-containing compounds, vehicle, polyurethane binder and, optionally, a colorant, provide a stable, jettable ink. The β-hydroxyalkyl amidyl compounds provide a unique additive to the inkjet ink and provide a means for crosslinking the printed image.

Neutralized or partially neutralized acidic and anhydric groups which exist in many ink formulations may chemically interact with the β-hydroxyalkyl amidyl at or after the printing of the ink- Neutralized or partially neutralized acidic groups can be derived from carbon, phosphorus and sulfur acids and the like. The chemical interaction of the acid/anhydride structures could lead to an ester linkage with the hydroxyl group of the β-hydroxyalkyl amidyl that would result in a matrix of these β-hydroxyalkyl amidyl systems and the acids/anhydrides. It is contemplated that this matrix may take the form of a crosslinked system that may be responsible for increased durability of the printed images and articles.

"Crosslinking" is meant to encompass a variety of chemical processes that resulting in crosslinking between the reactive chemical components. In the case of the β-hydroxyalkyl amidyl system, it is expected that it will react with acidic and anhydric components in the system. These components may exist on the substrate that is digitally printed, dispersants in the ink, binders in the inks, pigments and dyes, especially those which have acidic features, and other ink components.

Optionally, the digitally printed substrate is heated to facilitate the interaction, of the β-hydroxyalkyl amidyl with the other ink components and/or the substrate.

### β-Hydroxyalkyl Amidyls

Examples of β-hydroxyalkyl amidyls are β-hydraxyalkyl amides, ureas and urethanes, which may react with acidic and anhydric functional compounds forming an ester bond.

While not being bound by theory, it is envisaged that the esterification of the β-hydroxyalkyl amidyl groups occurs via an intermediate product with an oxazolinium structure. The other β-hydroxyalkyl amidyls of the present invention may also react by a similar cyclic intermediate.

A preferred example of a β-hydroxyalkyl amide is represented by Formula (III) 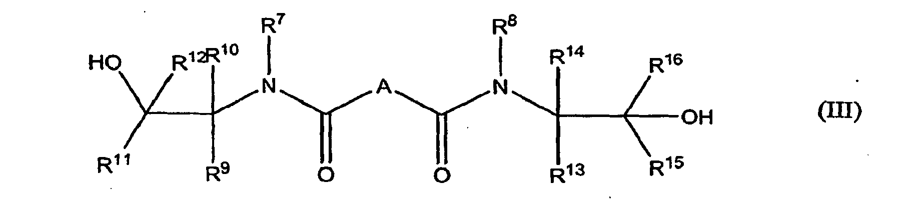 wherein:
A is a divalent organic radical derived from a saturated, unsaturated, substituted alkyl or aryl containing 1 to 24 carbon atoms;
R⁷ and R⁸ are individually selected from the group consisting of hydrogen, a lower alkyl having 1 to 5 carbon atoms, and a hydroxyalkyl having 1 to 5 carbon atoms;
R⁹, R¹⁰, R¹¹, R¹², R¹³, R¹⁴, R¹⁵, and R¹⁶ are each individually selected from the group consisting of hydrogen, and a straight or branched chain lower alkyl having 1 to 5 carbon atoms provided that R⁹, R¹⁰, R¹¹, R¹² and R¹³, R¹⁴, R¹⁵, R¹⁶ can be bonded pairwise to form a cyclic alkyl having from 5-12 carbon atoms;
Formula (III) is based on Formula (I), wherein n=2 and Z=A (a divalent organic radical).

Preferred structures of the Formula (III) are wherein A = -(CH₂)₄-; R⁷ and R⁸ are each a β-hydroxyalkyl having 2 carbon atoms which may be substituted with methyl; R⁹, R¹⁰, R¹², R¹³, R¹⁴, and R¹⁶ are hydrogen; and R¹¹and R¹⁵ are each methyl or hydrogen.

An example of a β-hydroxyalkyl urea is represented by Formula (IV) 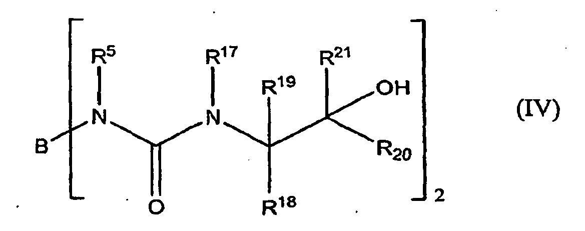 wherein
R¹⁷ is selected from the group consisting of hydrogen, a lower alkyl having 1 to 5 carbon atoms, and a hydroxyalkyl having 1 to 5 carbon atoms;
R¹⁸, R¹⁹, R²⁰, R²¹, are each individually selected from the group consisting of hydrogen, a straight or branched chain lower alkyl having 1 to 5 carbon atoms, provided that R¹⁸, R¹⁹, R²⁰, R²¹ can be bonded pairwise to form a cyclic alkyl having from 5-12 carbon atoms.
Formula (IV) is based on Formula (II), wherein n' = 2, Z' is NR⁵, Z" is B.

Preferred structures of the formula (IV) are wherein Z" is derived from isophorone diisocyanate, R⁵ is hydrogen, R¹⁷ is β-hydroxyalkyl having 2 carbon atoms which can be substituted with methyl; R¹⁸, R¹⁹, and, R²¹ are hydrogen; R²⁰ is methyl or hydrogen.

An example of a β-hydroxyalkyl urethane is represented by Formula (V) 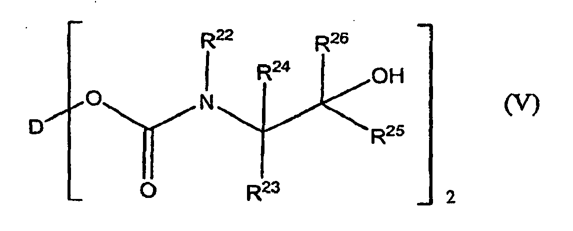 wherein
D is selected from the group consisting of a direct bond and a polyvalent organic radical derived from a saturated, unsaturated, substituted alkyl or alkyl containing 1 to 24 carbon atoms;
R²² is selected from the group consisting of hydrogen, a lower alkyl having 1 to 5 carbon atoms and a hydroxyalkyl having 1 to 5 carbon atoms;
R²³, R²⁴, R²⁵, R²⁶ are each individually selected from the group consisting of hydrogen, a lower alkyl group (straight or branched chain) having 1 to 5 carbon atoms provided that R²³, R²⁴, R²⁵, R²⁶ can be bonded pairwise to form a cyclic alkyl having from 5-12 carbon atoms.
Formula (V) is based on Formula (II), wherein n'=2, each Z' is O, and Z" is D.

The preferred β-hydroxyalkyl amidyl compounds are the amides and ureas as depicted in Formulas (III) and (IV) above.

The substituted alkyl and aryl can be substituted with groups such as ethers, esters, amines, thioether, mercaptans, hydroxy, halides, acid groups etc.

### Acidic- and Anhydric-Containing Groups

The neutralized or partially neutralized acidic and anhydric containing groups, can come from the binder or any additive to the ink or from the substrate. In addition to binders, the list of common additives include dispersants, surfactants and the like.

Dispersants are often employed in ink jet inks to stabilize pigments and disperse dyes. When utilized dispersants are added to a pigment slurry, dye slurry, dye solution and this mixture is subject to dispersive forces to achieve a stable dispersion. This dispersion in turn is used to prepare the ink formulation.

Dispersants, if used, can be soluble or dispersed polymer(s). They can be any suitable polymer, for example, soluble polymers may include linear homopolymers, copolymers or block polymers; they also can be structured polymers including graft or branched polymers, stars, dendrimers, etc. The dispersed polymers can include latexes, polyurethane dispersions, etc. The polymers may be made by any known process including but not limited to free radical, group transfer, ionic, RAFT, condensation and other types of polymerization.

The dispersant used to stabilize the pigment is preferably a dispersed polymer. Structured or random polymers may be used, although structured polymers are preferred for use as dispersants for reasons well known in the art. The term "structured polymer" means polymers having a block, branched or graft structure. Examples of structured polymers include AB or BAB block copolymers such as disclosed in US5085698; ABC block copolymers such as disclosed in EP-A-0556649; and graft polymers such as disclosed in US5231131. Other polymeric dispersants that can be used are described, for example, in US6117921, US6262152, US6306994 and US6433117. The disclosure of each of these publications is incorporated herein by reference for all purposes as if fully set forth.

Polymer dispersants suitable for use in the present invention generally comprise both hydrophobic and hydrophilic monomers. Some examples of hydrophobic monomers used in random polymers are methyl methacrylate, n-butyl methacrylate, 2-ethylhexyl methacrylate, benzyl methacrylate, 2-phenylethyl methacrylate and the corresponding acrylates. Examples of hydrophilic monomers are methacrylic acid, acrylic acid, dimethylaminoethyl(meth)acrylate and salts thereof. These hydrophilic monomers that have neutralized or partially neutralized carboxylic acids are likely reactive sites for the β-hydroxyalkyl amidyls. Also quaternary salts such as dimethylaminoethyl(meth)acrylate may be employed.

While not being limiting, it is contemplated that the dispersants should preferably contain acidic sites that could chemically interact with the β-hydroxyalkyl amidyl compounds.

### Colorants

When a colorant is included in the inks of this invention, suitable colorants include soluble colorants such as dyes, and insoluble colorants such as dispersed pigments (pigment plus dispersing agent) and self-dispersing pigments.

Conventional dyes such as anionic, cationic, amphoteric and non-ionic dyes are useful in this invention. Such dyes are well known to those of ordinary skill in the art. Anionic dyes are those dyes that, in aqueous solution, yield colored anions. Cationic dyes are those dyes that, in aqueous solution, yield colored cations. Typically anionic dyes contain carboxylic or sulfonic acid groups as the ionic moiety, and as such are preferred colorants to use with β-hydroxyalkyl amidyls. Cationic dyes usually contain quaternary nitrogen groups.

The types of anionic dyes most useful in this invention are, for example, Acid, Direct, Food, Mordant and Reactive dyes. Anionic dyes are selected from the group consisting of nitroso compounds, nitro compounds, azo compounds, stilbene compounds, triarylmethane compounds, xanthene compounds, quinoline compounds, thiazole compounds, azine compounds, oxazine compounds, thiazine compounds, aminoketone compounds, anthraquinone compounds, indigoid compounds and phthalocyanine compounds.

The types of cationic dyes that are most useful in this invention include mainly the basic dyes and some of the mordant dyes that are designed to bind acidic sites on a substrate, such as fibers. Useful types of such dyes include the azo compounds, diphenylmethane compounds, triarylmethanes, xanthene compounds, acridine compounds, quinoline compounds, methine or polymethine compounds, thiazole compounds, indamine or indophenyl compounds, azine compounds, oxazine compounds, and thiazine compounds, among others, all of which are well known to those skilled in the art.

Useful dyes include (cyan) Acid Blue 9 and Direct Blue 199; (magenta) Acid Red 52, Reactive Red 180, Acid Red 37, Cl Reactive Red 23; and (yellow) Direct Yellow 86, Direct Yellow 132 and Acid Yellow 23.

Pigments suitable for used in the present invention are those generally well-known in the art for aqueous inkjet inks. Traditionally, pigments are stabilized by dispersing agents, such as polymeric dispersants or surfactants, to produce a stable dispersion of the pigment in the vehicle. More recently though, so-called "self-dispersible" or "self-dispersing" pigments (hereafter "SDP") have been developed. As the name would imply, SDPs are dispersible in water without dispersants. Dispersed dyes can also be considered pigments as they are insoluble in the aqueous inks used herein.

Pigments that are stabilized by added dispersing agents may be prepared by methods known in the art. It is generally desirable to make the stabilized pigment in a concentrated form. The stabilized pigment is first prepared by premixing the selected pigment(s) and polymeric dispersant(s) in an aqueous carrier medium (such as water and, optionally, a water-miscible solvent), and then dispersing or deflocculating the pigment. The dispersing step may be accomplished in a 2-roll mill, media mill, a horizontal mini mill, a ball mill, an attritor, or by passing the mixture through a plurality of nozzles within a liquid jet interaction chamber at a liquid pressure of at least 5,000 psi to produce a uniform dispersion of the pigment particles in the aqueous carrier medium (microfluidizer). Alternatively, the concentrates may be prepared by dry milling the polymeric dispersant and the pigment under pressure. The media for the media mill is chosen from commonly available media, including zirconia, YTZ and nylon. These various dispersion processes are in a general sense well known in the art, as exemplified by US5022592, US5026427, US5310778, US5891231, US5679138, US5976232 and US20030089277. The disclosure of each of these publications is incorporated by reference herein for all purposes as if fully set forth. Preferred are 2-roll mill, media mill, and by passing the mixture through a plurality of nozzles within a liquid jet interaction chamber at a liquid pressure of at least 5,000 psi.

After the milling process is complete the pigment concentrate may be "let down" into an aqueous system. "Let down" refers to the dilution of the concentrate with mixing or dispersing, the intensity of the mixing/dispersing normally being determined by trial and error using routine methodology, and often being dependent on the combination of the polymeric dispersant, solvent and pigment.

A wide variety of organic and inorganic pigments, alone or in combination, may be selected to make the ink. The term "pigment" as used herein means an insoluble colorant. The pigment particles are sufficiently small to permit free flow of the ink through the inkjet printing device, especially at the ejecting nozzles that usually have a diameter ranging from about 10 micron to about 50 micron. The particle size also has an influence on the pigment dispersion stability, which is critical throughout the life of the ink. Brownian motion of minute particles will help prevent the particles from flocculation. It is also desirable to use small particles for maximum color strength and gloss. The range of useful particle size is typically about 0.005 micron to about 15 micron. Preferably, the pigment particle size should range from about 0.005 to about 5 micron and, most preferably, from about 0.005 to about 1 micron. The average particle size as measured by dynamic light scattering is preferably less than about 500 nm, more preferably less than about 300 nm.

The selected pigment(s) may be used in dry or wet form. For example, pigments are usually manufactured in aqueous media and the resulting pigment is obtained as water-wet presscake. In presscake form, the pigment is not agglomerated to the extent that it is in dry form. Thus, pigments in water-wet presscake form do not require as much deflocculation in the process of preparing the inks as pigments in dry form. Representative commercial dry pigments are listed in US5085698.

In the case of organic pigments, the ink may contain up to about 30%, preferably about 0.1 to about 25%, and more preferably about 0.25 to about 10%, pigment by weight based on the total ink weight. If an inorganic pigment is selected, the ink will tend to contain higher weight percentages of pigment than with comparable inks employing organic pigment, and may be as high as about 75% in some cases, since inorganic pigments generally have higher specific gravities than organic pigments.

Self-dispersed pigments (SDPs) can be use with the β-hydroxyalkyl amidyls and are often advantageous over traditional dispersant-stabilized pigments from the standpoint of greater stability and lower viscosity at the same pigment loading. This can provide greater formulation latitude in final ink.

SDPs, and particularly self-dispersing carbon black pigments, are disclosed in, for example, US2439442, US3023118, US3279935 and US3347632. Additional disclosures of SDPs, methods of making SDPs and/or aqueous inkjet inks formulated with SDP's can be found in, for example, US5554739, US5571311, US5609671, US5672198, US5698016, US5707432, US5718746, US5747562, US5749950, US5803959, US5837045, US5846307, US5851280, US5861447, US5885335, US5895522, US5922118, US5928419, US5976233, US6057384, US6099632, US6123759, US6153001, US6221141, US6221142, US6221143, US6281267, US6329446, US6852156, US2001/0035110, EP-A-1114851, EP-A-1158030, WO01/10963, and WO01/25340. The disclosures of all of the above-identified publications are incorporated by reference herein for all purposes as if fully set forth.

Although not a limiting reason for the choice of the colorants, those colorants that have neutralized or partially neutralized acidic groups, especially carboxylic acid groups, may chemically interact with the β-hydroxyalkyl amidyl at or after the printing of the ink. This chemical interaction could lead to a polyester linkage with the hydroxy group of the β-hydroxyalkyl amide or urea that would result in a crosslinked matrix of these β-hydroxyalkyl amidyl systems and the carboxylic acids. Carbon black and SDP's are the examples of colorants that have carboxylic acid groups.

### Vehicle

The vehicle for the ink may be either aqueous or non aqueous as described below. It is preferable that the ink have an aqueous vehicle.

"Aqueous vehicle" refers to water or a mixture of water and at least one water-soluble organic solvent (co-solvent). Selection of a suitable mixture depends on requirements of the specific application, such as desired surface tension and viscosity, the selected colorant, drying time of the ink, and the type of substrate onto which the ink will be printed. Representative examples of water-soluble organic solvents that may be selected are disclosed in previously incorporated US5085698.

The aqueous inks of the present invention are comprised primarily of water. Thus, the instant inks comprise at least about 10%, preferably at least about 25%, and more preferably at least about 40% by weight of water, based on the total weight of the ink.

If a mixture of water and a water-soluble solvent is used, the aqueous vehicle typically will contain about 10% to about 95% by weight water with the balance (i.e., about 90% to about 5% by weight) being the water-soluble solvent. Preferred compositions contain about 65% to about 95% by weight water, based on the total weight of the aqueous vehicle.

The amount of aqueous vehicle in the ink is typically in the range of about 70% to about 99.8%, and preferably about 80% to about 99.8%, by weight based on total weight of the ink.

The aqueous vehicle can be made to be fast penetrating (rapid drying) by including surfactants or penetrating agents such as glycol ethers and 1,2-alkanediols. Glycol ethers include ethylene glycol monobutyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methyl-1-methoxybutanol, propylene glycol mono-t-butyl ether, propylene glycol mono-n-propyl ether, propylene glycol mono-iso-propyl ether, propylene glycol mono-n-butyl ether, dipropylene glycol mono-n-butyl ether, dipropylene glycol mono-n- propyl ether, and dipropylene glycol mono-isopropyl ether. 1,2-alkanediols are preferably 1,2-C₄₋₆ alkanediols, most preferably 1,2- hexanediol. Suitable surfactants include ethoxylated acetylene diols (e.g. Surfynols® series from Air Products), ethoxylated primary (e.g. Neodol® series from Shell) and secondary (e.g. Tergitol® series from Union Carbide) alcohols, Pluronic® block copolymer surfactants, sulfosuccinates (e.g. Aerosol® series from Cytec), organosilicones (e.g. Silwet® series from Witco) and fluoro surfactants (e.g. Zonyl® series from DuPont).

The amount of glycol ether(s) and 1,2-alkanediol(s) added must be properly determined, but is typically in the range of from about 1 to about 15% by weight and more typically about 2 to about 10% by weight, based on the total weight of the ink.

Surfactants may be used, typically in the amount of about 0.01 to about 5% and preferably about 0.1 to about 1 %, based on the total weight of the ink.

In addition, solvents that are not water miscible may be added to the ink to facilitate the printing the ink which has a β-hydroxyalkyl amidyl component in it. Examples of these water-immiscible solvents are propylene carbonate and dipropylene glycol monomethyl ether.

"Nonaqueous vehicle" refers a vehicle that is substantially comprised of a nonaqueous solvent or mixtures of such solvents, which solvents can be polar and/or nonpolar. Examples of polar solvents include alcohols, esters, ketones and ethers, particularly mono- and di-alkyl ethers of glycols and polyglycols such as monomethyl ethers of mono-, di- and tripropylene glycols and the mono-n-butyl ethers of ethylene, diethylene and triethylene glycols. Examples of nonpolar solvents include aliphatic and aromatic hydrocarbons having at least six carton atoms and mixtures thereof including refinery distillation products and by-products. The solvents may also be comprised in part, or entirely, or polymerizable solvents such as solvents which cure upon application of UV light (UV curable).

Even when no water is deliberately added to the nonaqueous vehicle, some adventitious water may be carried into the formulation, but generally this will be no more than about 2-4%. By definition, the nonaqueous ink of this invention will have no more than about 10%, and preferably no more than about 5%, by weight of water based on the total weight of the nonaqueous vehicle.

Glycol ethers include ethylene glycol monobutyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methyl-1-methoxybutanol, propylene glycol mono-t-butyl ether, propylene glycol mono-n-propyl ether, propylene glycol mono-iso-propyl ether, propylene glycol mono-n-butyl ether, dipropylene glycol mono-n-butyl ether, dipropylene glycol mono-n- propyl ether, and dipropylene glycol mono-isopropyl ether. Also useful are esters, especially acetate esters, of the preceding glycol ethers.

The amount of vehicle in the ink is typically in the range of about 70% to about 99.8%, and preferably about 80% to about 99.8%, based on total weight of the ink.

### Proportion of Main Ingredients

The colorant levels employed in the inks are those levels which are typically needed to impart the desired color density to the printed image. Typically, pigment is present at a level of about 0.1 % up to a level of about 30% by weight of the total weight of ink. Alternatively, the pigment can be about 0.25 to about 25% of the total weight of the ink. Further, the pigment can be about 0.25 to about 15% of the total weight of the ink.

The β-hydroxyalkyl amidyl level employed is dictated by the range of ink properties that can be tolerated. Generally, β-hydroxyalkyl amidyl levels will range up to about 12% by weight based on the total weight of the ink. More particularly the β-hydroxyalkyl amidyls are from about 0.2% up to about 10%, and typically about 0.25% to about 7.5% based on the total weight of ink. The right balance of properties must be determined for each circumstance, which can be done by the person of ordinary skill in the art using routine experimentation.

The ratio of the number of equivalents of hydroxyl of the β-hydroxyalky amidyl to the number of equivalents of acid groups and acid salts of the polymeric binder and polymeric dispersant in the ink is generally from about 1/0.01 to about 1/1. An excess of equivalents of hydroxyl to the equivalents of carboxyl and salt from the binder and dispersant is preferred. This ratio does not include the number of equivalents of other β-hydroxyalky amidyl reactive groups, neutralized or partially neutralized acidic and anhydric containing groups that can come from other additives in the ink and from the substrate.

The binder preferably is greater than about 2 weight percent in the ink formulation. The upper limit to the binder is constrained by the need to maintain the other ink properties required for a stable, jettable ink jet ink.

### Other Ingredients

The inkjet ink may contain other ingredients as are well known in the art. For example, anionic, nonionic, cationic or amphoteric surfactants may be used. In aqueous inks, the surfactants are typically present in the amount of about 0.01 to about 5%, and preferably about 0.2 to about 2%, based on the total weight of the ink.

Co-solvents, such as those exemplified in US5272201 (the disclosure of which is incorporated by reference herein for all purposes as if fully set forth) may be included to improve pluggage inhibition properties of the ink composition.

Biocides may be used to inhibit growth of microorganisms.

Sequestering agents such as EDTA may also be included to eliminate deleterious effects of heavy metal impurities.

### Ink Properties

Jet velocity, separation length of the droplets, drop size and stream stability are greatly affected by the surface tension and the viscosity of the ink. Inkjet inks suitable for use with inkjet printing systems should have a surface tension in the range of about 20 dyne/cm to about 70 dyne/cm, more preferably about 25 to about 40 dyne/cm at 25°C. Viscosity is preferably in the range of about 1 cP to about 30 cP, more preferably about 2 to about 20 cP at 25°C. The ink has physical properties compatible with a wide range of ejecting conditions, i.e., driving frequency of the pen and the shape and size of the nozzle.

The inks should have excellent storage stability for long periods. Preferably, the instant inks can sustain elevated temperature in a closed container for extended periods (e.g. 70°C for 7 days) without substantial increase in viscosity or particle size.

Further, the ink should not corrode parts of the inkjet printing device it comes in contact with, and it should be essentially odorless and non-toxic.

The printed inks on textiles of the instant invention can achieve the beneficial durable properties of washfastness.

### Ink Sets

The ink sets in accordance with the present invention preferably comprise at least three differently colored inks (such as CMY), and more preferably at least four differently colored inks (such as CMYK), wherein at least one of the inks is an inkjet ink comprising an vehicle, a binder, a colorant and a β-hydroxyalkyl amidyl, wherein the colorant is soluble or dispersible in the vehicle. The inks are preferably aqueous.

The other inks of the ink set can be non aqueous but are preferably aqueous inks, and may contain dyes, pigments or combinations thereof as the colorant. Such other inks are, in a general sense, well known to those of ordinary skill in the art.

In one preferred embodiment, the ink set comprises three differently colored inks as follows:
(a) a first colored ink comprising a first aqueous vehicle, a binder, a first colorant and a first β-hydroxyalkyl amidyl, wherein the first colorant is soluble or dispersible in the first aqueous vehicle.
(b) a second colored ink comprising a second aqueous vehicle, a binder, a second colorant and a second β-hydroxyalkyl amidyl, wherein the second colorant is soluble or dispersible in the second aqueous vehicle.
(c) a third colored ink comprising a third aqueous vehicle, a binder, a third colorant and a third β-hydroxyalkyl amidyl, wherein the third colorant is soluble or dispersible in the third aqueous vehicle.

Preferably, the first colored ink is a cyan ink, the second colored ink is a magenta ink and the third colored ink is a yellow ink.

In another preferred embodiment, this ink set further comprises (d) a fourth colored ink comprising a fourth aqueous vehicle, a binder, a fourth colorant and a fourth β-hydroxyalkyl amidyl, wherein the fourth colorant is soluble or dispersible in the fourth aqueous vehicle. Preferably this fourth colored ink is a black ink.

The ink set may further comprise one or more "gamut-expanding" inks, including different colored inks such as an orange ink, a green ink, a red ink and/or a blue ink, and combinations of full strength and light strengths inks such as light cyan and light magenta. These "gamut-expanding" inks are particularly useful in textile printing for simulating the color gamut of analog screen printing, such as disclosed in US20030128246 (the disclosure of which is incorporated by reference herein for all purposes as if fully set forth).

### Method of Printing

The inks and ink sets of the present invention can be by printing with any inkjet printer. The substrate can be any suitable substrate including plain paper (such as standard elecrophotographic papers), treated paper (such as coated papers like photographic papers), textile, and non-porous substrates including polymeric films such as polyvinyl chloride and polyester.

A particularly preferred use of the inks and ink sets of the present invention is in the inkjet printing of textiles. Textiles include but are not limited to cotton, wool, silk, nylon, polyester and the like, and blends thereof. The finished form of the textile includes, but is not limited to, fabrics, garments, furnishings such as carpets and upholstery fabrics, and the like. Additionally, fibrous textile materials that come into consideration are especially hydroxyl-group-containing fibrous materials, including but not limited to natural fibrous materials such as cotton, linen and hemp, and regenerated fibrous materials such as viscose and lyocell. Particularly preferred textiles include viscose and especially cotton. Further fibrous materials include wool, silk, polyvinyl, polyacrylonitrile, polyamide, aramide, polypropylene and polyurethane. The said fibrous materials are preferably in the form of sheet-form textile woven fabrics, knitted fabrics or webs.

Suitable commercially available inkjet printers designed for textile printing include, for example, DuPont™ Artistri™ 3320, 3210 and 2020 Textile Printers (E.I. du Pont de Nemours and Company, Wilmington, DE), Textile Jet (Mimaki USA, Duluth, GA), DisplayMaker Fabrijet (MacDermid ColorSpan, Eden Prairie, MN), and Amber, Zircon, and Amethyst (Stork).

The printed textiles may optionally be post processed with heat and/or pressure, such as disclosed in US20030160851 (the disclosure of which is incorporated by reference herein for all purposes as if fully set forth).

Upper temperature is dictated by the tolerance of the particular textile being printed. Lower temperature is determined by the amount of heat needed to achieve the desired level of durability. Generally, fusion temperatures will be at least about 80°C and preferably at least about 125°C, and more preferably at least about 160°C.

Fusion pressures required to achieve improved durability can be very modest. Thus, pressures can be about 3 psig, preferably at least about 5 psig, more preferrable at least about 8 psig and most preferably at least about 10 psig. Fusion pressures of about 30 psi and above seem to provide no additional benefit to durability, but such pressures are not excluded. The pressure can be applied by rollers, platens, etc.

The duration of fusion (amount of time the printed textile is under pressure at the desired temperature) is at least 1 minute with longer times not believed to be particularly critical. Most of the time in the fusion operation generally involves bringing the printed substrate to the desired temperature. Once the print is fully up to temperature, the time under pressure can be brief.

Alternatively, the printed substrate may also be baked. Likely equipment for this would be an oven. The baking temperatures will be at least about 80°C and preferably at least about 125°C, and more preferably at least about 160°C. The duration of the baking should be at least one minute.

The fusion step and/or baking step may be combined with a steaming step.

This invention now will be further illustrated, but not limited, by the following examples.

### EXAMPLES

Tests used for the inks that contain β-hydroxyalkyl amidyl and the printed textiles were those commonly used in the art. Some specific procedures are listed below.

### Printing and Testing Techniques

Inkjet printers used in the following examples were:
(1) a print system with a stationery printhead mount with up to 8 print heads, and a media platen. The printheads were from Xaar (Cambridge, United Kingdom). The media platen held the applicable media and traveled underneath the print heads. The sample size was 7.6 cm by 19 cm. Unless otherwise noted this print system was used to print the test samples.
(2) Seiko IP-4010 printer configured to accept fabrics
(3) DuPont® Artistri® 2020 printer.

The fabrics used were obtained from Testfabrics, Inc, (Pittston PA.) namely: (1) 100% cotton fabric style # 419W, which is a bleached, mercerized combed broadcloth (133x72); (2) Polyester/cotton fabric style # 7409, which is a 65/35 poplin mercerized and bleached

In some examples, the printed textile was fused at elevated temperature and pressure. Two different fusing apparatus were employed:
(1) a Glenro (Paterson, NJ) Bondtex™ Fabric and Apparel Fusing Press which moves the printed fabric between two heated belts equipped with adjustable pneumatic press and finally through a nip roller assembly; and
(2) a platen press, assembled for the purpose of precisely controlling temperature and pressure. The platen press was comprised of two parallel 6" square platens with embedded resistive heating elements that could be set to maintain a desired platen temperature. The platens were fixed in a mutually parallel position to a pneumatic press that could press the platens together at a desired pressure by means of adjustable air pressure. Care was taken to be sure the platens were aligned so as to apply equal pressure across the entire work piece being fused. The effective area of the platen could be reduced, as needed, by inserting a spacer (made, for example from silicone rubber) of appropriate dimensions to allow operation on smaller work pieces.

The standard temperature for the fusing step in the examples was 160°C unless otherwise indicated.

The printed textiles were tested according to methods developed by the American Association of Textile Chemists and Colorists, (AATCC), Research Triangle Park, NC. The AATCC Test Method 61-1996, "Colorfastness to Laundering, Home and Commercial: Accelerated", was used. In that test, colorfastness is described as "the resistance of a material to change in any of its color characteristics, to transfer of its colorant(s) to adjacent materials or both as a result of the exposure of the material to any environment that might be encountered during the processing, testing, storage or use of the material." Tests 2A and 3A were done and the color washfastness and stain rating were recorded. The rating for these tests were from 1-5 with 5 being the best result, that is, little or no loss of color and little or no transfer of color to another material, respectively.

Colorfastness to crocking was also determined by AATCC Crockmeter Method, AATCC Test Method 8-1996. The ratings for these tests were from 1-5 with 5 being the best result, that is, little or no loss of color and little or no transfer of color to another material, respectively. The results are rounded to the nearest 0.5, which was judged to be accuracy of the method.

The colorant dispersion, or other stable aqueous colorant, was prepared by techniques known in the inkjet art. A black pigment dispersion was used for the ink examples except where noted.

### Ingredients and Abbreviations

N,N,N',N'-tetrakis(2-hydroxyethyl)adipamide, Primid XL-552, Ems-Chemie AG, Switzerland
N,N,N',N'-tetrakis(2-hydroxypropyl)adipamide, Primid XL1260, Ems-Chemie AG, Switzerland
DBTL = dibutyltindilaurate
DMEA = dimethylethanolamine
DMIPA = dimethylisopropylamine
DMPA = dimethylol propionic acid
EDA = ethylene diamine
EDTA = ethylenediamine tetraacetic acid
ETEGMA = ethoxytriethylenglycolmethacrylate
IPDI = isophoronediisocyanate
MAA = methyacrylic acid
POEA = 2-phenoxyethyl acrylate
TEA = triethylamine
TETA = triethylenetetramine
THF = tetrahydrofuran

Unless otherwise noted, the above chemicals were obtained from Aldrich (Milwaukee, WI) or other similar suppliers of laboratory chemicals.
BYK® 348 - a silicone surfactant from Byk-Chemie (Wallingford, CT)
Desmophene C 1200 - a polyester carbonate diol from Bayer (Pittsburgh, PA)
Liponic™ EG-1 - ethoxylated glycerin humectant from Lipo Chemicals Inc. (Patterson, NJ)
Silwet® L77 - an organosilicone surfactant from GE Silicones (Wilton, CT)
Surfynol® 104E - a nonionic surfactant from Air Products (Allentown, PA)
Surfynol® 485E - a nonionic surfactant from Air Products (Allentown, PA)
Surfynol® 440 - a nonionic surfactant from Air Products (Allentown, PA)

### Extent of Polyurethane Reaction

The extent of polyurethane reaction was determined by detecting NCO% by dibutylamine titration, a common method in urethane chemistry.

In this method, a sample of the NCO containing prepolymer is reacted with a known amount of dibutylamine solution and the residual amine is back titrated with HCl.

### Particle Size Measurements

The particle size for the polyurethane dispersions, pigments and the inks was determined by dynamic light scattering using a Microtrac® UPA 150 analyzer from Honeywell/Microtrac (Montgomeryville PA).

This technique is based on the relationship between the velocity distribution of the particles and the particle size. Laser generated light is scattered from each particle and is Doppler shifted by the particle Brownian motion. The frequency difference between the shifted light and the unshifted light is amplified, digitalized and analyzed to recover the particle size distribution.

The reported numbers below are the volume average particle size.

### Solid Content Measurement

Solid content for the solvent-free polyurethane dispersoids was measured with a moisture analyzer, model MA50 from Sartorius. For polyurethane dispersoid containing high boiling solvent, such as NMP, the solid content was then determined by the weight differences before and after baking in 150°C oven for 180 minutes.

### Synthesis of β-HydroxyAlkyl Amidyl Urea Derivative of Isophorone Diisocyanate

To a dry, alkali- and acid-free flask, equipped with an addition funnel, a condenser, stirrer and a nitrogen gas line was added 53.5 g (0.402 moles) diisopropanol amine, 27.63 g 1-methyl-2-pyrrolidinone. The contents were heated to 40°C and mixed well. 44.4 g (0.20moles) IPDI was then added to the flask via the addition funnel over 25 min. A water bath cooled the solution to 70°C or lower during the addition. An additional 5 g of 1-methyl-2-pyrrolidinone was used to rinse any residual IPDI into the flask. An additional 32 g 1-methyl-2-pyrrolidinone was added to obtain the final solution.

### Preparation of Black Pigment Dispersion

A black dispersion was prepared by first mixing well the following ingredients: (i) 210.4 parts by weight (pbw) deionized water, (ii) 80.3 pbw of a 41.5 wt% (solids) anionic polymeric dispersant, and (iii) 9.24 pbw of dimethylethanolamine. The anionic polymer dispersant was a graft copolymer 66.3-g-4.2/29.5 POEA-g-ETEGMA/MAA prepared according to " Preparation of Dispersant 1" from previously incorporated US20030128246, with the ratios of monomers adjusted to obtain the 66.2/4.2/29.5 instead of the 61.6/5.8/32.6 ratio indicated in the publication.

To this was gradually added 100 pbw black pigment (Nipex 180IQ, Degussa). After the pigment was incorporated, 100 pbw deionized water was mixed in to form the millbase, which was circulated through a media mill for grinding. 55.4 pbw deionized water was then added for dilution to final strength.

The resulting 15 wt% dispersion had the following properties: a viscosity of 8.60 cP (Brookfield viscometer, 20°C), a pH of about 7.5 and a median particle size of 92 nm.

### Carboxyl-Containing Ink Components

### Preparation of Dispersed Acrylic Binder (Syn Pol 1)

This preparation is a standard preparation of this type of product. A solution prepared from deionized water (30.02 parts by weight (pbw)), nonylphenoxy polyethyleneoxy ethyl sulfate (0.110 pbw) and allyl dodecyl sulfosuccinate sodium salt (0.154 pbw) was added to a reaction vessel equipped with a heating mantle, stirrer, thermometer, reflux condenser and two addition funnels. The resulting mixture was heated to 85°C with mixing. A solution comprising deionized water (3.78 pbw) and ammonium persulfate (0.088 pbw) was placed in an addition funnel attached to the reactor. A second solution comprised of 2-hydroxyethyl acrylate monomer (1.06 pbw), methacrylic acid monomer (MAA) (1.06 pbw), N-methylol methacrylamide monomer (MOLMAN) (1.58 pbw), methyl methacrylate monomer (MMA) (9.23 pbw), styrene monomer (Sty) (5.28 pbw), 2-ethyl hexyl acrylate monomer (2-EHA) (17.40 pbw), nonylphenoxy polyethyleneoxy ethyl sulfate (0.31 pbw), allyl dodecyl sulfosuccinate sodium salt (0.44 pbw) and deionized water (20.4 pbw) was emulsified with an agitator capable of homogenizing the mixture. This pre-emulsified solution was placed in an addition funnel attached to the reactor. Five percent of the resulting pre-emulsion was added to the reaction vessel and the temperature of the constituents in the vessel was stabilized at 85°C. The ammonium persulfate solution was then added and held for 5 minutes. The remainder of the pre-emulsion was added over a period of 90 min. at a uniform rate. The temperature of the resulting polymerization mixture was maintained at 88-90°C. during the addition. The polymerization mixture was held at this temperature for 1 hour. The polymerization mixture was cooled to 35°C and neutralized with a solution of deionized water (4.13 pbw) aqueous ammonium hydroxide solution (1.01 pbw) and of 1,3-dihydrosylmethyl-5,5-dimethylhydantoin (0.088 pbw) to achieve a pH of 8. to 9.2. Water (-3.88 pbw) was added to the reactor or used to flush the reactor contents into storage facilities.

The resulting dispersed polymer had the following approximate composition: MMA/STY/2EHA/MOLMAN/HEA/MAA in a weight ratio of 26.5/15/50/2.5/3/3. The dispersed polymer average particle size was 0.085 microns and percent weight solids was 35.7%.

### Polyurethane Dispersoid 1 (Syn Pol 2)

To a dry, alkali- and acid-free flask, equipped with an addition funnel, a condenser, stirrer and a nitrogen gas line, was added 699.2 g Desmophene C 1200, 280.0 g acetone and 0.06g DBTL. The contents were heated to 40°C and mixed well. 189.14 g IPDI was then added to the flask via the addition funnel at 40°C over 60 min, with any residual IPDI being rinsed from the addition funnel into the flask with 15.5 g acetone.

The flask temperature was raised to 50°C, held for 30 minutes then followed by 44.57 g DMPA, then followed by 25.2 g TEA, was added to the flask via the addition funnel, which was then rinsed with 15.5 g acetone. The flask temperature was then raised again to 50°C and held for 60 minutes.

With the temperature at 50°C, 1520.0 g deionized (DI) water was added over 10 minutes, followed by 131.00 g EDA (as a 6.25% solution in water) over 5 minutes, via the addition funnel, which was then rinsed with 80.0g water. The mixture was held at 50°C for 1 hr, then cooled to room temperature.

Acetone (-310.0 g) was removed under vacuum, leaving a final dispersoid of non-crosslinked polyurethane with about 35.0% solids by weight.

### Polyurethane Dispersoid 2 (Syn Pol 3)

To a dry, alkali- and acid-free flask, equipped with an addition funnel, a condenser, stirred and a nitrogen gas line, was added 699.2 g Desmophene C 1200, 280.0 g acetone and 0.06g DBTL. The contents were heated to 40°C and mixed well. 189.14 g IPDI was then added to the flask via the addition funnel at 40°C over 60. min, with any residual IPDI being rinsed from the addition funnel into the flask with 15.5 g acetone.

The flask temperature was raised to 50°C, then held for 30 minutes. 44.57 g DMPA followed by 25.2 g TEA was added to the flask via the addition funnel, which was then rinsed with 15.5 g acetone. The flask temperature was then raised again to 50°C and held at 50°C until NCO % was less than 1.23 %.

1498.0 g deionized (DI) water at 50 °C was added over 10 minutes, followed by mixture of 24.4 g EDA (as a 6.25% solution in water) and 118.7 g TETA (as a 6.25% solution in water) over 5 minutes, via the addition funnel, which was then rinsed with 80.0g water. The mixture was held at 50°C for 1 hr, then cooled to room temperature.

Acetone (-310.0 g) was removed under vacuum, leaving a final dispersoid of polyurethane with about 35.0% solids by weight.

### Preparation of Inks

Inks used in the examples were made according to standard procedures in the inkjet art. Ingredient amounts are in weight percent of the final ink. The β-hydroxyalkyl amidyl are indicated for each ink.

As an example of ink preparation, the ink vehicle was prepared with the β-hydroxyalkyl amidyl and added with stirring to the synthetic polymer binders. After stirring until a good dispersion was obtained, the mixture was then added to the pigment dispersion and stirred for another 3 hours, or until a good ink dispersion was obtained.

### Tests of β-HydroxyAlkyl Amidyl-Containing Inks

The composition for Ink Examples A and B, and Comparative Ink A, are listed in Table 1. The β-hydroxyalkyl amidyl used in Inks A and B was N,N,N',N'-tetrakis(2-hydroxypropyl)adipamide {Primid 1260). The preparation of the black dispersion was described previously.

**Table 1: Ink Compositions**

| Ink Example, with components in wt % | A | B | Comp Ink A |
|---|---|---|---|
| Black Dispersion (pigment %) (from above) | 4.25 | 4.25 | 4.25 |
| Primid® 1260 | 3.00 | 3.00 | 0.00 |
| Syn Pol 3 (from above) | 11.0 | 4.5 | 11.0 |
| Glycerol | 14.0 | 14.0 | 14.0 |
| Ethylene Glycol | 12.0 | 12.0 | 12.0 |
| Surfynol® 104E | 0.15 | 0.15 | 0.15 |
| Silwet L-77 | 0.15 | 0.15 | 0.15 |
| Proxel | 0.16 | 0.16 | 0.16 |
| Water (to100%) | Balance | Balance | Balance |

**Table 2: Washfastness results; 3A wash test; 7409 poly/cotton**

| Curing conditions | | Ink A | Ink B | Comp Ink A |
|---|---|---|---|---|
| 140 °C | 30 min, bake | 4.0 | 3.5 | 2.5 |
| 150 °C | 30 min, bake | 4.5 | 3.0 | 3.0 |
| 160°C | 10 min, fuse | 4.0 | 3.5 | 1.5 |
| 160°C | 1 min, fuse | 2.0 | 2.0 | 2.0 |

**Table 3: Washfastness results; 3A wash test; 419 cotton**

| Curing conditions | | Ink A | Ink B | Comp Ink A |
|---|---|---|---|---|
| 140 °C | 30 min, bake | 4.5 | 4.0 | 5.0 |
| 150 °C | 30 min, bake | 5.0 | 3.5 | 4.5 |
| 190 °C | 1 min, fuse | 3.5 | 3.5 | 1.5 |

Textiles printed with ink jet inks containing β-hydroxyalkyl amidyls produced superior print when tested for washfastness by the AATCC 3A test. Baking of the textiles appeared to improve performance.

### Tests of Different Levels of β-Hydroxyalkyl Amidyls

Three black Inks, C, D and E were prepared according to the ingredients listed in Table 4. 3 different levels of β-hydroxyalkyl amidyls were tested versus Com Ink B.

The stability of the inks were tested by heating them to 70°C for 7 days. If key properties did not change by more than 20 %, the inks were considered to be stable.

**Table 4**

| Composition in wt. % | Ink C | Ink D | Ink E | Comp Ink B |
|---|---|---|---|---|
| Glycerol | 15.00 | 14.00 | 15.00 | 16.00 |
| Ethylene Glycol | 10.00 | 10.00 | 10.00 | 11.00 |
| Primid® 1260 | 3.00 | 5.00 | 1.65 | None |
| Surfynol® 104E | 0.15 | 0.15 | 0.15 | 0.15 |
| Sliwet® L-77 | 0.15 | 0.15 | 0.15 | 0.15 |
| Proxel® | 0.16 | 0.16 | 0.16 | 0.16 |
| Syn Pol 3 (from above) | 11.00 | 10.50 | 11.00 | 11.00 |
| Black Dispersion (from above) | 4.25 | 4.25 | 4.25 | 4.25 |
| D.I. Water | Balance | Balance | Balance | Balance |
| Initial Properties of the ink | | | | |
| pH | 7.57 | 7.60 | 7.61 | 7.59 |
| Viscosity (30 rpm@25°C); cps | 8.69 | 8.97 | 7.51 | 6.7 |
| Particle Size (nm); d50/d95 | 68.3/115 | 67.8/144.2 | 7.31/114.7 | 66.2/113.6 |
| %<204.4 nm | 99.300 | 98.6 | 100 | |
| Properties after 7 days at 70°C | | | | |
| pH | 7.3 | 7.35 | 7.24 | 7.25 |
| Viscosity (30 rpm@25°C) | 9.5 | 25.60 | 7.24 | 5.8 |
| Particle Size (nm) d50/d95 | 82.2/147. 6 | 109.9/235.2 | 73.3/134.8 | 77.5/140.7 |
| %<204.4 nm | 98.3 | 84.8 | 98.5 | 98.5 |

The β-hydroxyalkyl amidyl inks C and E were judged stable, but ink D was judged to be less stable by this 70°C test. An alternative test for ink stability was to store the ink at room temperature and measure key properties over time. After 6 months of room temperature storage the viscosities of Ink C, D and E were 8.5, 8.72 and 7.4 respectively.

These inks were printed onto 7409 polyester cotton and tested by the 3 A test.

**Table 5**

| Heating conditions | Ink C | Ink D | Ink E | Comp Ink B |
|---|---|---|---|---|
| 150°C 5min | 2.5 | 3.0 | | 2.0 |
| 150°C 10min | 4.0 | 4.0 | 3.5 | 2.5 |
| 160°C 5min | 3.5 | 4.5 | 3.5 | 2.5 |
| 160°C 10min | 4.0 | 4.0 | 4.0 | 2.5 |
| 165°C 5 min | 4.0 | 4.0 | | 3.0 |
| 165°C 10 min | 4.0 | 4.5 | | 3.0 |
| 175°C 5min | 4.0 | 4.5 | | 3.0 |
| 175°C 10 min | 4.0 | 4.5 | | 3.0 |
| 185°C 5min | 4.5 | 4.5 | | 2.5 |
| 185°C 10min | 4.5 | 4.5 | | 3.5 |
| 150°C bake 30min | 4.5 | 4.0 | 4.0 | 3.0 |
| 160°C fuse 10min | 4.5 | 3.5 | 3.5 | 1.5 |

Under all heating conditions the β-hydroxyalkyl amidyl containing inks demonstrated superior performance to the comparative ink.

These inks were also tested for Dry and Wet Crock.

**Table 6**

| | Untreated | | 160C/10min baked | |
|---|---|---|---|---|
| | Dry | Wet | Dry | Wet |
| Ink C | 4.2 | 2.7 | 4.7 | 3.0 |
| Ink D | 4.3 | 2.2 | 4.7 | 3.4 |
| Ink E | 4.4 | 2.3 | 4.8 | 3.5 |
| Com Ink B | 4.7 | 2.6 | 4.8 | 2.8 |

Crock was generally not affected by the addition of β-hydroxyalkyl amidyl.

### Inks with Acid-Containing Blinders

**Table 7**

| Composition in wt. % | Ink F | Ink G' Comp. | Comp Ink C | Comp Ink D |
|---|---|---|---|---|
| Glycerol | 14.00 | 14.00 | 15.00 | 16.00 |
| Ethylene Glycol | 10.00 | 10.00 | 10.00 | 11.00 |
| Primid® 1260 | 3.00 | 3.00 | None | none |
| Surfynol® 104E | 0.15 | 0.15 | 0.15 | 0.15 |
| Sliwet® L-77 | 0.15 | 0.15 | 0.15 | 0.15 |
| Proxel® (G-1627) | 0.16 | 0.16 | 0.16 | 0.16 |
| Syn Pol 2 (from above) | 11.00 | | 11.00 | |
| Syn Pol 1 (from above) | | 11.00 | | 11.00 |
| Black Dispersion (from above) | 4.25 | 4.25 | 4.25 | 4.25 |
| D.I. Water | Balance | Balance | Balance | Balance |

**Table 8: 3A Wash Fastness**

| | FUSED 190°C, 1 min | BAKED 160°C, 10 min | BAKED 140°C, 30 min | BAKED 150°C, 30 min |
|---|---|---|---|---|
| | Fabric #419 Cotton | | | |
| Ink F | 1.0 | 0.9 | 0.9 | |
| Comp Ink C | 0.8 | 0.9 | 0.6 | |
| Ink G' Comp. 4.5 | | 5.0 | 5.0 | |
| Comp Ink D | 4.5 | 5.0 | 5.0 | |
| | Fabric #7409 Poly/Cotton Blend | | | |
| Ink F | | 1.9 | | 2.9 |
| Comp Ink C | | 1.1 | | 1.3 |
| Ink G' Comp. | | 4.4 | | 4.5 |
| Comp Ink D | | 3.9 | | 3.6 |

**Table 9**

| | OD at 100% Coverage | UNTREATED CROCK (A04) | | B1 CROCK: 160°C, 10 min. (A04) | |
|---|---|---|---|---|---|
| | | Dry | Wet | Dry | Wet |
| | Fabric #419 Cotton | | | | |
| Ink F | 1.23 | 4.6 | 2.3 | 4.7 | 2.4 |
| Comp Ink C | 1.24 | 4.1 | 2.1 | 4.6 | 2.4 |
| Ink G' Comp. | 1.24 | 1.7 | 0.8 | 1.7 | 1.9 |
| Comp Ink D | 1.23 | 1.7 | 1.1 | 1.5 | 1.9 |
| | Fabric #7409 Poly/Cotton Blend | | | | |
| Ink F | 1.07 | 4.2 | 2.0 | 4.7 | 2.7 |
| Comp Ink C | 1.07 | 4.6 | 2.1 | 4.6 | 2.6 |
| Ink G' Comp. | 1.11 | 3.0 | 0.6 | 4.1 | 2.5 |
| Comp Ink D | 1.10 | 4.1 | 1.6 | 4.3 | 2.4 |

Ink prepared using a Self-Dispersed Pigment (SDP) dispersion and β-hydroxyalkyl amide also results in good performance for textile printing.

**Table 10**

| Composition in wt. % | Ink H | Comp Ink E |
|---|---|---|
| Glycerol | 15.00 | 14.00 |
| Ethylene Glycol | 10.00 | 10.00 |
| Primid® 1260 | 3.00 | 0.00 |
| Surfynal® 104E | 0.15 | 0.15 |
| Sliwet® L-77 | 0.15 | 0.15 |
| Proxel® | 0.16 | 0.16 |
| Syn Pol 3 (from above) | 11.00 | 10.50 |
| SDP dispersion | 4.25 | 4.25 |
| D.I. Water | Balance | Balance |

| | | |
|---|---|---|
| Note: The SDP dispersion was prepared using the procedure described in US 6,852,156, Example 1. | | |

Instead of printing this ink, a draw down method was used to transfer the β-hydroxyalkyl amide containing ink to a textile. Prints were made by draw-down method. Due to textile's fast ink absorption, ink was first deposited along a strip of mylar film, which was placed on top of the fabric's upper end. The ink was then drawn down from the mylar film onto the fabric with a no. 7 wire rod. Prints were air dried for two days before oven baking.

The 3A washfastness for 7409 poly/cotton results are listed in Table 11.

**Table 11**

| Textile treatment conditions | Ink H | Comp Ink E |
|---|---|---|
| 150C bake 30min | 4 | 3 |
| 160C bake 10 min | 3 | 2.5 |

Ink Prepared with N,N,N',N'-tetrakis(2-hydroxyethyl)adipamide

N,N,N',N'-tetrakis(2-hydroxyethyl)adipamide was used in Ink I, which has an identical composition as Ink A, N,N,N',N'-tetrakis(2-hydroxyethyl)adipamide (Primid 552) is substituted for N,N,N',N'-tetrakis(2-hydroxypropyl)adipamide (Primid 1260) on a weight/weight basis.

**Table 12: Ink I**

| Temperature, °C | Time, Condition | 3A Washfastness |
|---|---|---|
| 150 | 10 min, bake | 2.5 |
| 160 | 10 min, bake | 4.0 |
| 170 | 10 min, bake | 4.0 |
| 160 | 5 min, fuse | 2.0 |
| 160 | 10 min fuse | 2.5 |

### Ink Made from β-HydroxyAlkyl Amidyl Urea Derivative of Isophorone Diisocyanate

An ink was prepared according to composition listed in Table using the urea derivative of isophorone diisocyanate. A 7409 polyester/cotton textile was treated by the draw down technique described for Ink H.

**Table 13**

| Composition in wt. % | Ink J |
|---|---|
| Glycerol | 14.00 |
| Ethylene Glycol | 10.00 |
| β-hydroxyalkyl amidyl urea (from above) | 2.00 |
| Surfynol® 104E | 0.15 |
| Sliwet® L-77 | 0.15 |
| Proxet® | 0.16 |
| Syn Pol 3 (from above) | 11.00 |
| SDP dispersion (from above) | 4.25 |
| D.I. Water | Balance |

The 3A Washfastness was measured at 3.0 for 160°C/10 min. bake and 3.5 for a 150°C/30 min. bake.

### β-hydroxyalkyl Amidyl Inks with Different Colors

Inks were prepared according to the recipes listed in Table 15. For the inks, the pigments and dispersion are listed in Table 14. Table 16 lists the washfastness and stain rating results for these colored inks.

**Table 14: Colored Inks, Pigment Types and Polymeric Dispersants**

| Color | Pigment type | Polymeric Dispersant |
|---|---|---|
| Yellow | PY 14 | BzMA//MAA/ETEGMA (13//13/7.5) |
| Magenta | PR 122 | BzMA//MAA/ETEGMA (13//13/7.5) |
| Cyan | PB 153 | BzMA//MAA (13//10) |
| Blue | PB 60 | BzMA//MAA/ETEGMA (13/113/7.5) |
| Orange | PO 34 | BzMAI/MAA/ETEGMA (13//13/7.5) |

| | | |
|---|---|---|
| Notes: BzMA//MAA(13//10) was prepared using the procedure "Preparation of Dispersant 2" from previously incorporated US20030128246. BzMA//MAA/ETEGMA (13//13/7.5) was prepared using the procedure "Preparation of Dispersant 3" from previously incorporated US20030128246. | | |

**Table 15**

| Composition in wt. % | Comp Ink F | Ink J | Comp Ink G | Ink K | Comp Ink H | Ink L |
|---|---|---|---|---|---|---|
| | Cyan; 3 | | Yellow; 4.25 % | | Magenta; 4.25 % | |
| Dowanol DPM | 5.00 | 5.00 | 3.00 | 3.00 | 3.00 | 3.00 |
| Glycerol (H-2) | 18.00 | 18.00 | 14.00 | 12.00 | 12.00 | 10.00 |
| LEG-1 (H934) | 6.00 | 6.00 | 4.00 | 4.00 | 3.00 | 3.00 |
| Ethylene Glycol | | | 5.00 | 5.00 | 8.00 | 8.00 |
| Sliwet® L-77 | 0.25 | 0.25 | 0.00 | 0.00 | | |
| Surfynol® 440 | 0.25 | 0.25 | 1.00 | 1.00 | 1.00 | 1.00 |
| Proxel® (G-1627) | 0.12 | 0.12 | 0.10 | 0.10 | 0.10 | 0.10 |
| Syn Pol 3 (from above) | 6.00 | 6.00 | 8.00 | 8.00 | 8.00 | 8.00 |
| Primid® 1260 | | 1.50 | | 2.00 | | 2.00 |
| Key Physical Properties | | | | | | |
| Viscosity (60 rpm@25°C): | 7.21 | 8.08 | 8.06 | 8.41 | 8.26 | 7.87 |
| pH | 8.18 | 8.17 | 8.02 | 8.02 | 8.14 | 8.06 |
| Surface Tension (mN/m): | 30.72 | 30.74 | 33.52 | 33.39 | 32.76 | 32.42 |
| Conductivity (mmhos): | 0.51 | 0.53 | 0.699 | 0.772 | 0.491 | 0.571 |
| Particle Size (nm), d50 | 61.4 | 71.1 | 76.7 | 80.7 | 76 | 92.4 |
| %<204.4 (nm) | 99.37 | 100.0 0 | 100.00 | 100.00 | 97.55 | 97.08 |
| Key Physical Properties; measured after 7 days at 70 C | | | | | | |
| Viscosity (60 rpm@25°C): | 7.33 | 7.57 | 7.83 | 8.06 | 7.93 | 7.33 |
| pH | 8.01 | 7.74 | 7.88 | 7.67 | 7.89 | 7.64 |
| Particle Size (nm), D50 | 75.3 | 72.8 | 79.9 | 80.3 | 81.2 | 93.7 |
| %<204.4 nm | 100 | 99.4 | 100 | 100 | 95.6 | 93.7 |

**Table 16**

| | OD at 100% Coverage | UNFUSED CROCK | | FUSED CROCK | | B1 CROCK: 160°C, 10 min. | |
|---|---|---|---|---|---|---|---|
| | OD | Dry | Wet | Dry | Wet | Dry | Wet |
| | Results on Fabric #419 100% Cotton | | | | | | |
| Comp Ink F | 1.07 | 4.3 | 2.3 | 4.2 | 2.7 | 4.2 | 2.9 |
| Ink K | 1.09 | 3.6 | 1.9 | 4.2 | 2.9 | 3.9 | 2.9 |
| Comp Ink G | 1.16 | 3.3 | 2.2 | 3.4 | 3.0 | 2.9 | 3.1 |
| Ink L | 1.16 | 3.53 | 2.2 | 3.3 | 2.8 | 3.1 | 2.9 |
| Comp Ink H | 1.16 | 3.1 | 2.5 | 3.6 | 3.0 | 3.5 | 3.2 |
| Ink M | 1.13 | 3.1 | 2.5 | 3.5 | 3.3 | 3.2 | 2.9 |
| | Results on Fabric #7409 Poly/Cotton Blend | | | | | | |
| Comp Ink F | 0.99 | 3.2 | 1.8 | 4.2 | 2.3 | 4.4 | 3.4 |
| Ink K | 1.01 | 3.0 | 2.0 | 4.2 | 2.5 | 4.4 | 3.1 |
| Comp Ink G | 1.04 | 3.7 | 2.3 | 3.8 | 2.5 | 3.5 | 3.2 |
| Ink L | 1.04 | 3.4 | 2.1 | 4.0 | 2.5 | 3.9 | 3.5 |
| Comp Ink H | 1.05 | 4.3 | 2.6 | 4.3 | 3.0 | 4.2 | 3.4 |
| Ink M | 1.03 | 3.1 | 2.1 | 4.1 | 2.7 | 4.1 | 3.7 |
| Fused condition for cotton: 190C/1min | | | | | | | |
| Fused condition for poly/cotton: 160C/1 min | | | | | | | |

**Table 17**

| | FUSED | | | | B1: BAKED 160°C, 10 min | B2: BAKED 140°C, 30 min | B3: BAKED 150°C, 30 min |
|---|---|---|---|---|---|---|---|
| | 2A Wash-fastness Rating | 2A Stain Rating | 3A Wash-fastness Rating | 3A Stain Rating | 3A Wash-fastness Rating | 3A Wash-fastness Rating | 3A Wash-fastness Rating |
| | Results on Fabric #419 100% Cotton | | | | | | |
| Comp Ink F | 5.0 | 4.5 | 3.0 | 2.0 | 3.5 | 4.0 | |
| Ink K | 5.0 | 4.5 | 3.0 | 2.5 | 3.5 | 2.5 | |
| Comp Ink G | 4.5 | 4.5 | 4.0 | 2.0 | 4.5 | 4.0 | |
| Ink L | 4.0 | 4.5 | 4.5 | 2.0 | 4.5 | 4.5 | |
| Comp Ink H | 4.5 | 4.5 | 3.5 | 2.5 | 3.5 | 4.0 | |
| Ink M | 4.5 | 4.5 | 3.5 | 3.0 | 3.0 | 2.5 | |
| | Results on Fabric #7409 Poly/Cotton Blend | | | | | | |
| Comp Ink F | 2.5 | 3.0 | 1.5 | 1.9 | 2.0 | | 2.0 |
| Ink K | 2.5 | 3.5 | 1.5 | 1.8 | 2.5 | | 2.5 |
| Comp Ink G | 3.5 | 4.5 | 3.0 | 1.9 | 4.0 | | 4.0 |
| Ink L | 3.5 | 4.5 | 3.0 | 1.9 | 4.0 | | 4.5 |
| Comp Ink H | 2.5 | 4.0 | 2.0 | 2.1 | 2.5 | | 3.0 |
| Ink M | 2.5 | 4.5 | 2.0 | 2.7 | 3.0 | | 3.5 |
| Fused condition for cotton: 190°C/1 min | | | | | | | |
| Fused condition for poly/cotton: 160°C/1min | | | | | | | |

## Claims

1. An inkjet ink composition comprising an ink vehicle, a binder and a β-hydroxyalkyl amidyl containing component dissolved and/or dispersed in the ink vehicle and
where the β-hydroxy alkyl amidyl containing component is represented by Formula (I) or (II), 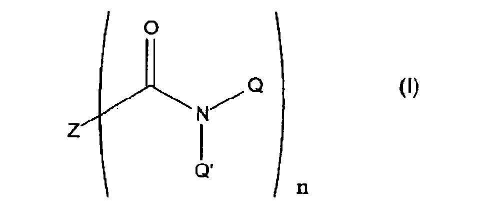 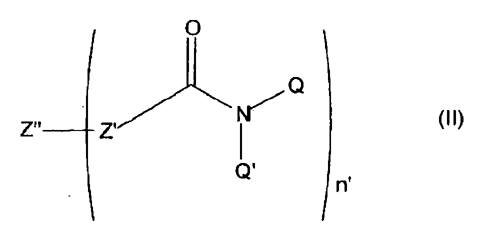 wherein 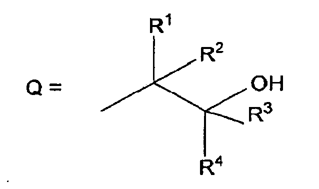 each Q' is individually selected from the group consisting of Q, hydrogen, an alkyl group having from 1 to 5 carbon atoms, and a hydroxyalkyl group having from 1 to 5 carbon atoms (other than Q);
each of R¹, R², R³ and R⁴ is individually selected from the group consisting of hydrogen and an alkyl group having from 1 to 5 carbon atoms, provided that R¹, R ² R³ and R⁴ can be bonded pairwise to form a cyclic alkyl having from 5-12 carbon atoms;
for Formula (I)
n is 1 or 2;
when n is 1, Z is selected from the group consisting of NR⁵R⁶, OR⁵ and SR⁵, wherein each of R⁵ and R⁶ is independently selected from the group consisting of hydrogen, Q, an organic radical, such as a saturated, unsaturated, substituted alkyl or aryl containing 1 to 24 carbon atoms; and
when n is 2, Z is a polyvalent organic radical such as derived from a saturated, unsaturated, substituted alkyl or aryl containing 1 to 24 carbon atoms;
for Formula (II)
n' is 2 or greater;
each Z' is independently selected from the group consisting of NR⁵, O and S;
each R⁵ is independently selected from the group consisting of hydrogen, Q, an organic radical such as a saturated, unsaturated, substituted alkyl or aryl containing 1 to 24 carbon atoms and
Z" is selected at least n'-valent organic radical derived from a saturated, unsaturated, substituted alkyl or aryl containing 1 to 24 carbon atoms
and where the binder is a polyurethane and is at least 2 weight percent based on the total weight of the ink.

2. The inkjet ink composition of claim 1 wherein the ink comprises from 0.2 to 12 weight percent of the β-hydroxylalkyl amidyl containing component, based on the total weight of the ink, or wherein the ink vehicle is aqueous.

3. The inkjet ink composition of claim 1 which comprises a colorant.

4. The inkjet ink composition of claim 3 wherein the ink comprises from 0.1 to 30% by weight of the colorant, based on the total weight of the ink.

5. The inkjet ink composition of claim 4 wherein the colorant comprises a pigment.

6. The inkjet ink composition of claim 1 where the β-hydroxy alkyl amidyl containing component is N,N,N',N'-tetrakis(2-hydroxypropyl)adipamide.

7. The inkjet ink composition of claim 1 where the β-hydroxy alkyl amidyl containing component is N,N,N',N'-tetrakis(2-hydroxyethyl)adipamide, or is selected from a Formula (I) compound represented by Formula (III) 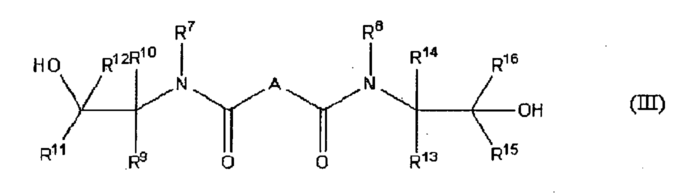 wherein:
A is a divalent organic radical derived from a saturated, unsaturated, substituted alkyl or aryl containing 1 to 24 carbon atoms;
R⁷ and R⁸ are individually selected from the group consisting of hydrogen, a lower alkyl having 1 to 5 carbon atoms, and a hydroxyalkyl having 1 to 5 carbon atoms;
R⁹, R¹⁰, R¹¹, R¹², R¹³, R¹⁴ ,R¹⁵, and R¹⁶ are each individually selected from the group consisting of hydrogen, and a straight or branched chain lower alkyl having 1 to 5 carbon atoms provided that R⁹, R¹⁰, R¹¹, R¹² and R¹³, R¹⁴ R¹⁵, R¹⁶ can be bonded pairwise to form a cyclic alkyl having from 5-12 carbon atoms.

8. The inkjet ink composition of claim 1 where the ß-hydroxy alkyl amidyl containing component is selected from a Formula (II) compound represented by Formula (IV) 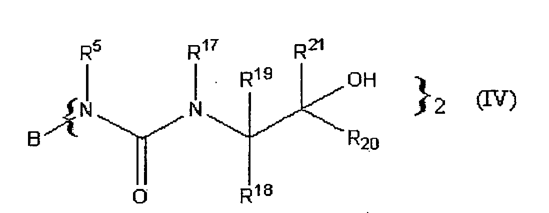 wherein
R¹⁷ is selected from the group consisting of hydrogen, a lower alkyl having 1 to 5 carbon atoms, and a hydroxyalkyl having 1 to 5 carbon atoms;
R¹⁸, R¹⁹, R²⁰ , R²¹, are each individually selected from the group consisting of hydrogen, a straight or branched chain lower alkyl having 1 to 5 carbon atoms, provided that R¹⁸, R¹⁹, R²⁰, R²¹ can be bonded pairwise to form a cyclic alkyl having from 5-12 carbon atoms, and
B is selected from the group consisting of organic radical derived from a saturated, unsaturated, substituted alkyl or aryl containing 1 to 24 carbon atoms.

9. The inkjet ink composition of claim 1 where the composition further comprises acidic or anhydric ink components as part of the ink or the acidic or anhydride ink components are part of another colorless ink that will be jetted with said inkjet ink composition.

10. An inkjet ink set comprising at least three differently colored inkjet inks, wherein at least one of the inks is an inkjet ink composition as set forth in any one of claims 1-9.

11. The inkjet ink set of claim 10, wherein ink set comprises:
(a) a first colored ink comprising a first aqueous vehicle, a binder, a first colorant and a first β-hydroxyalkyl amidyl, wherein the first colorant is soluble or dispersible in the first aqueous vehicle, and wherein the binder is at least 2 weight percent based on the total ink;
(b) a second colored ink comprising a second aqueous vehicle, a binder, a second colorant and a second β-hydroxyalkyl amidyl, wherein the second colorant is soluble or dispersible in the second aqueous vehicle, and wherein the binder is at least 2 weight percent based on the total ink and
(c) a third colored ink comprising a third aqueous vehicle, a binder, a third colorant and a third β-hydroxyalkyl amidyl, wherein the third colorant is soluble or dispersible in the third aqueous vehicle, and wherein the binder is at least about 2 weight percent based on the total ink

12. The inkjet ink set of claim 11, wherein the first colored ink is a cyan ink, the second colored ink is a magenta ink and the third colored ink is a yellow ink, or further comprising (d) a fourth colored ink, preferably a black ink, comprising a fourth aqueous vehicle, a binder, a fourth colorant and a fourth β-hydroxyalkyl amidyl , wherein the fourth colorant is soluble or dispersible in the fourth aqueous vehicle, and wherein the binder is at least 2 weight percent based on the total ink.

13. A method for inkjet printing onto a substrate, comprising the steps of:
(a) providing an inkjet printer that is responsive to digital data signals;
(b) loading the printer with a substrate to be printed;
(c) loading the printer with an ink as set forth in any one of claims 1-9, or an inkjet ink set as set forth in any one of claims 10-12; and
(d) printing onto the substrate using the ink or inkjet ink set in response to the digital data signals.

14. The method of claim 13, wherein the substrate is a textile.

15. The method of claim 14, wherein the printed substrate is post treated by heating the textile to at least 125 ° C for at least 1 minute.

16. The method of claim 13, wherein the printed textile has a wash fastness of at least 2.5 (as measured in accordance with AATCC Test Method 61-1996 as the 2A test)

## Patentansprüche

1. Tintenstrahltintenzusammensetzung umfassend ein Tintenvehikel, ein Bindemittel und eine β-Hydroxyalkylamidyl enthaltende Komponente, die in dem Tintenvehikel gelöst und/oder dispergiert ist und
wobei die β-Hydroxyalkylamidyl enthaltende Komponente durch die Formel (I) oder (II) 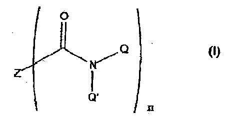 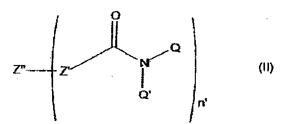 dargestellt ist, wobei 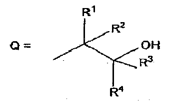 jedes Q' einzeln aus der Gruppe ausgewählt ist bestehend aus Q, Wasserstoff, einer Alkylgruppe, die 1 bis 5 Kohlenstoffatome aufweist, und einer Hydroxyalkylgruppe, die 1 bis 5 Kohlenstoffatome (bei denen es sich nicht um Q handelt) aufweist;
jedes von R¹, R², R³ und R⁴ einzeln aus der Gruppe ausgewählt ist bestehend aus Wasserstoff und einer Alkylgruppe, die 1 bis 5 Kohlenstoffatome aufweist, vorausgesetzt, dass R¹, R², R³ und R⁴ paarweise unter Bildung eines cyclischen Alkyls, das 5-12 Kohlenstoffatome aufweist, aneinander gebunden werden können;
in der Formel (1)
n 1 oder 2 ist beträgt;
wenn n 1 beträgt, Z aus der Gruppe ausgewählt ist bestehend aus NR⁵R⁶, OR⁵ und SR⁵, wobei jedes von R⁵ und R⁶ unabhängig aus der Gruppe ausgewählt ist bestehend aus Wasserstoff, Q, einem organischen Radikal wie beispielsweise einem gesättigten, ungesättigten, substituierten Alkyl oder Aryl, das 1 bis 24 Kohlenstoffatome enthält; und
wenn n 2 beträgt, Z ein mehrwertiges organisches Radikal ist, wie es von einem gesättigten, ungesättigten, substituierten Alkyl oder Aryl abgeleitet ist, das 1 bis 24 Kohlenstoffatome enthält,
in der Formel (II)
n' 2 oder mehr beträgt;
jedes Z' unabhängig aus der Gruppe ausgewählt ist bestehend aus NR⁵, O und S;
jedes R⁵ unabhängig aus der Gruppe ausgewählt ist bestehend aus Wasserstoff, Q, einem organischen Radikal wie einem gesättigten, ungesättigten, substituierten Alkyl oder Aryl, das 1 bis 24 Kohlenstoffatome enthält und
Z" mindestens ein ausgewähltes n'-wertiges organisches Radikal ist, das von einem gesättigten, ungesättigten, substituierten Alkyl oder Aryl abgeleitet ist, das 1 bis 24 Kohlenstoffatome enthält
und wobei das Bindemittel ein Polyurethan ist und mindestens 2 Gewichtsprozent, auf das Gesamtgewicht der Tinte bezogen, ausmacht.

2. Tintensttahltintenzusammensetzung nach Anspruch 1, wobei die Tinte 0,2 bis 12 Gewichtsprozent der β-Hydroxyalkylamidyl enthaltenden Komponente, auf das Gesamtgewicht der Tinte bezogen, umfasst oder wobei der Tintenträger wässrig ist.

3. Tintenstrahltintenzusammensetzung nach Anspruch 1, die ein Farbmittel umfasst.

4. Tintenstrahltintenzusammensetzung nach Anspruch 3, wobei die Tinte 0,1 bis 30 Gew.-% des Farbmittels, auf das Gesamtgewicht der Tinte bezogen, umfasst.

5. Tintenstrahltintenzusammensetzung nach Anspruch 4, wobei das Farbmittel ein Pigment umfasst.

6. Tintenstrahltintenzusammensetzung nach Anspruch 1 , wobei die β-Hydroxyalkylamidyl enthaltende Komponente N,N,N',N'-Tetrakis(2-hydroxypropyl)adipamid ist.

7. Tintenstrahltintenzusammensetzung nach Anspruch 1, wobei die β-Hydroxyalkylamidyl enthaltende Komponente N,N,N',N'-Tetrakis(2-hydroxyethyl)adipamid ist oder aus einer Formel (I)-Zusammensetzung ausgewählt ist, die durch die Formel (III) 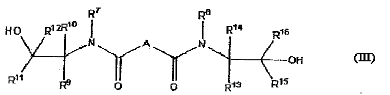 dargestellt ist, wobei:
A ein zweiwertiges organisches Radikal ist, das von einem gesättigten, ungesättigten, substituierten Alkyl oder Aryl abgeleitet ist, das 1 bis 24 Kohlenstoffatome enthält;
R⁷ und R⁸ einzeln aus der Gruppe ausgewählt sind bestehend aus Wasserstoff, einem niederen Alkyl, das 1 bis 5 Kohlenstoffatome aufweist, und einem Hydroxyalkyl, das 1 bis 5 Kohlenstoffatome aufweist,
R⁹, R¹⁰, R¹¹, R¹², R¹³, R¹⁴, R¹⁵ und R¹⁶ jeweils einzeln aus der Gruppe ausgewählt sind bestehend aus Wasserstoff und einem geradkettigen oder verzweigtkettigen niederen Alkyl, das 1 bis 5 Kohlenstoffatome aufweist, vorausgesetzt, dass R⁹, R¹⁰, R¹¹, R¹² und R¹³, R¹⁴, R¹⁵, R¹⁶ paarweise unter Bildung eines cyclischen Alkyls, das 5-12 Kohlenstoffatome aufweist, aneinander gebunden werden können.

8. Tintenstrahltintenzusammensetzung nach Anspruch 1, wobei die β-Hydroxyalkylamidyl enthaltende Komponente aus einer Formel (II)-Verbindung der ausgewählt ist, die durch die Formel (IV) 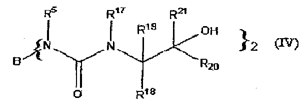 dargestellt ist,
wobei
R¹⁷ aus der Gruppe ausgewählt ist bestehend aus Wasserstoff, einem niederen Alkyl, das 1 bis 5 Kohlenstoffatome aufweist, und einem Hydroxyalkyl, das 1 bis 5 Kohlenstoffatome aufweist;
R¹⁸, R¹⁹, R²⁰, R²¹ jeweils einzeln aus der Gruppe ausgewählt sind bestehend aus Wasserstoff, einem geradkettigen oder verzweigtkettigen niederen Alkyl, das 1 bis 5 Kohlenstoffatome aufweist, vorausgesetzt, dass R¹⁸, R¹⁹, R²⁰, R²¹ paarweise zur Bildung eines cyclischen Alkyls, das 5-12 Kohlenstoffatome aufweist, aneinander gebunden werden können und
B aus der Gruppe ausgewählt ist bestehend aus einem organischen Radikal, das von einem gesättigten, ungesättigten, substituierten Alkyl oder Aryl abgeleitet ist, das 1 bis 24 Kohlenstoffatome enthält.

9. Tintenstrahltintenzusammensetzung nach Anspruch 1, wobei die Zusammensetzung des weiteren saure oder anhydrische Tintenkomponenten als Teil der Tinte umfasst oder die sauren oder Anhydridtintenkomponenten Teil einer anderen farblosen Tinte sind, die mit der Tintenstrahltintenzusammensetzung als Strahl ausgestoßen werden wird.

10. Tintenstrahltintensatz umfassend mindestens drei verschiedenfarbene Tintenstrahltinten, wobei mindestens eine der Tinten eine Tintenstrahltintenzusammensetzung, wie in einem der Ansprüche 1-9 aufgeführt, ist.

11. Tintenstrahltintensatz nach Anspruch 10, wobei der Tintensatz Folgendes umfasst:
(a) eine erste farbige Tinte umfassend ein erstes wässriges Vehikel, ein Bindemittel, ein erstes Farbmittel und ein erstes β-Hydroxyalkylamidyl, wobei das erste Farbmittel in dem ersten wässrigen Vehikel löslich oder dispergierbar ist und wobei das Bindemittel mindestens 2 Gewichtsprozent, auf die gesamte Tinte bezogen, ausmacht;
(b) eine zweite farbige Tinte umfassend ein zweites wässriges Vehikel, ein Bindemittel, ein zweites Farbmittel und ein zweites β-Hydroxyalkylamidyl, wobei das zweite Farbmittel in dem zweiten wässrigen Vehikel löslich oder dispergierbar ist und wobei das Bindemittel mindestens 2 Gewichtsprozent, auf die gesamte Tinte bezogen, ausmacht;
(c) eine dritte farbige Tinte umfassend ein drittes wässriges Vehikel, ein Bindemittel, ein drittes Farbmittel und ein drittes β-Hydroxyalkylamidyl, wobei das dritte Farbmittel in dem dritten wässrigen Vehikel löslich oder dispergierbar ist und wobei das Bindemittel mindestens 2 Gewichtsprozent, auf die gesamte Tinte bezogen, ausmacht;

12. Tintenstrahltintensatz nach Anspruch 11, wobei die erste farbige Tinte eine cyanfarbene Tinte, die zweite farbige Tinte eine magentafarbene Tinte und die dritte farbige Tinte eine gelbe Tinte ist oder des weiteren (d) eine vierte farbige Tinte, bevorzugt eine schwarze Tinte, umfasst, die ein viertes wässriges Vehikel, ein Bindemittel, ein viertes Farbmittel und ein viertes β-Hydroxyalkylamidyl umfasst, wobei das vierte Farbmittel in dem vierten wässrigen Vehikel löslich oder dispergierbar ist und wobei das Bindemittel mindestens 2 Gewichtsprozent, auf die gesamte Tinte bezogen, ausmacht.

13. Verfahren zum Tintenstrahldrucken auf ein Substrat, umfassend die Schritte des:
(a) Bereitstellens eines Tintenstrahldruckers, der auf digitale Datensignale anspricht;
(b) Aufladens des Druckers mit einem zu bedruckenden Substrat;
(c) Aufladens des Druckers mit einer Tinte wie in einem der Ansprüche 1-9 aufgeführt oder einem Tintenstrahltintensatz wie in einem der Ansprüche 10-12 aufgeführt; und
(d) Druckens auf das Substrat unter Anwendung der Tinte oder des Tintenstrahltintensatzes als Reaktion auf die digitalen Datensignale hin.

14. Verfahren nach Anspruch 13, wobei das Substrat ein Textilstoff ist.

15. Verfahren nach Anspruch 14, wobei das bedruckte Substrat durch Erhitzen des Textilstoffs auf mindestens 125°C mindestens 1 Minute lang nachbehandelt wird.

16. Verfahren nach Anspruch 13, wobei der bedruckte Textilstoff eine Waschechtheit von mindestens 2,5 (wie der AATCC-Testmethode 61-1996 als 2A-Test gemäß gemessen) aufweist.

## Revendications

1. Composition de jet d'encre comprenant un véhicule pour encre, un liant et un constituant contenant un β-hydroxyalkyl amidyle dissous et/ou dispersé dans le véhicule pour encre et
dans laquelle le constituant contenant un β-hydroxyalkyl amidyle est représenté par la formule (I) ou (II), 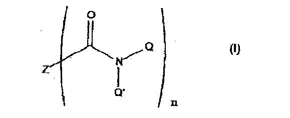 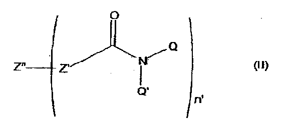 dans laquelle 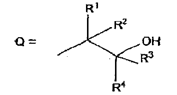 chaque Q' est individuellement choisi dans le groupe constitué par Q, un hydrogène, un groupe alkyle ayant de 1 à 5 atomes de carbone, et un groupe hydroxyalkyle ayant de 1 à 5 atomes de carbone (autre que Q);
chacun parmi R¹, R², R³ et R⁴ est individuellement choisi dans le groupe constitué par l'hydrogène et un groupe alkyle ayant de 1 à 5 atomes de carbone, étant entendu que R¹, R², R³ et R⁴ peuvent être liés par paires pour former un alkyle cyclique ayant de 5 à 12 atomes de carbone;
pour la formule (I)
n est 1 ou 2;
lorsque n est 1, Z est choisi dans le groupe constitué par NR⁵R⁶, OR⁵ et SR⁵, où chacun parmi R⁵ et R⁶ est indépendamment choisi dans le groupe constitué par l'hydrogène, Q, un radical organique, tel qu'un alkyle ou aryle saturé, insaturé, substitué contenant 1 à 24 atomes de carbone; et
lorsque n est 2, Z est un radical organique polyvalent tel que dérivé d'un alkyle ou aryle saturé, insaturé, substitué contenant 1 à 24 atomes de carbone;
pour la formule (II)
n'est 2 ou plus;
chaque Z' est indépendamment choisi dans le groupe constitué par NR⁵, O et S;
chaque R⁵ est indépendamment choisi dans le groupe constitué par l'hydrogène, Q, un radical organique tel qu'un alkyle ou aryle saturé, insaturé, substitué contenant 1 à 24 atomes de carbone et
Z" est choisi parmi au moins un radical organique de valence n' dérivé d'un alkyle ou aryle saturé, insaturé, substitué contenant 1 à 24 atomes de carbone
et dans lequel le liant est un polyuréthane et est à au moins 2 pour cent en poids par rapport au poids total de l'encre.

2. Composition d'encre pour jet d'encre selon la revendication 1, dans laquelle l'encre comprend de 0,2 à 12 pour cent en poids du constituant contenant un β-hydroxyalkyl amidyle, par rapport au poids total de l'encre ou dans laquelle le véhicule pour encre est aqueux.

3. Composition d'encre pour jet d'encre selon la revendication 1, qui comprend un colorant.

4. Composition d'encre pour jet d'encre selon la revendication 3, dans laquelle l'encre comprend de 0,1 à 30% en poids du colorant, par rapport au poids total de l'encre.

5. Composition d'encre pour jet d'encre selon la revendication 4, dans laquelle le colorant comprend un pigment.

6. Composition d'encre pour jet d'encre selon la revendication 1, dans laquelle le constituant contenant un β-hydroxyalkyl amidyle est le N,N,N',N'-tétrakis(2-hydroxypropyl)adipamide.

7. Composition d'encre pour jet d'encre selon la revendication 1, dans laquelle le constituant contenant un β-hydroxyalkyl amidyle est le N,N,N',N'-tétrakis(2-hydroxyéthyl)adipamide ou est choisi parmi un composé de formule (I) représenté par la formule (III) 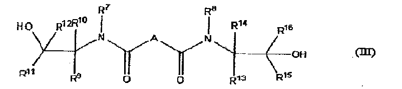 dans laquelle:
A est un radical organique divalent dérivé d'un alkyle ou aryle saturé, insaturé, substitué contenant 1 à 24 atomes de carbone;
R⁷ et R⁸ sont individuellement choisis dans le groupe constitué par l'hydrogène, un alkyle inférieur ayant 1 à 5 atomes de carbone, et un hydroxyalkyle ayant 1 à 5 atomes de carbone;
R⁹, R¹⁰, R¹¹, R¹²,R¹³, R¹⁴, R¹⁵ et R¹⁶ sont chacun individuellement choisis dans le groupe constitué par l'hydrogène, et un alkyle inférieur à chaîne linéaire ou ramifiée ayant 1 à 5 atomes de carbone, étant entendu que R⁹, R¹⁰, R¹⁰, R¹² et R¹³, R¹⁴, R¹⁵, R¹⁶ peuvent être liés par paires pour former un alkyle cyclique ayant de 5 à 12 atomes de carbone.

8. Composition d'encre pour jet d'encre selon la revendication 1, dans laquelle le constituant contenant un β-hydroxyalkyl amidyle est choisi parmi un composé de formule (II) représenté par la formule (IV) 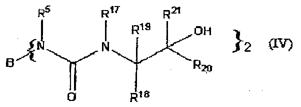 dans laquelle
R¹⁷ est choisi dans le groupe constitué par l'hydrogène, un alkyle inférieur ayant 1 à 5 atomes de carbone et un hydroxyalkyle ayant 1 à 5 atomes de carbone;
R¹⁸, R¹⁹, R²⁰, R²¹ sont chacun individuellement choisis dans le groupe constitué par l'hydrogène, un alkyle inférieur à chaîne linéaire ou ramifiée ayant 1 à 5 atomes de carbone, étant entendu que R¹⁸, R¹⁹, R²⁰, R²¹ peuvent être liés par paires pour former un alkyle cyclique ayant de 5 à 12 atomes de carbone, et
B est choisi dans le groupe constitué par un radical organique dérivé d'un alkyle ou d'un aryle saturé, insaturé, substitué contenant 1 à 24 atomes de carbone.

9. Composition d'encre pour jet d'encre selon la revendication 1, laquelle composition comprend en outre des constituants d'encre acides ou anhydres en tant que partie de l'encre ou les constituants d'encre acides ou anhydres font partie d'une autre encre incolore qui va être projetée avec ladite composition d'encre pour jet d'encre.

10. Ensemble d'encres pour jet d'encre comprenant au moins trois encres pour jet d'encre colorées différemment, dans lequel au moins l'une des encres est une composition d'encre pour jet d'encre selon l'une quelconque des revendications 1 à 9.

11. Ensemble d'encres pour jet d'encre selon la revendication 10, lequel ensemble d'encres comprend:
(a) une première encre colorée comprenant un premier véhicule aqueux, un liant, un premier colorant et un premier β-hydroxyalkyl amidyle, dans laquelle le premier colorant est soluble ou dispersible dans le premier véhicule aqueux, et dans laquelle le liant est à au moins 2 pour cent en poids par rapport à l'encre totale;
(b) une deuxième encre colorée comprenant un deuxième véhicule aqueux, un liant, un deuxième colorant et un deuxième β-hydroxyalkyl amidyle, dans laquelle le deuxième colorant est soluble ou dispersible dans le deuxième véhicule aqueux et dans laquelle le liant est à au moins 2 pour cent en poids par rapport à l'encre totale et
(c) une troisième encre colorée comprenant un troisième véhicule aqueux, un liant, un troisième colorant et un troisième β-hydroxyalkyl amidyle, dans laquelle le troisième colorant est soluble ou dispersible dans le troisième véhicule aqueux et dans laquelle le liant est à au moins environ 2 pour cent en poids par rapport à l'encre totale.

12. Ensemble d'encres pour jet d'encre selon la revendication 11, dans lequel la première encre colorée est une encre cyan, la deuxième encre colorée est une encre magenta et la troisième encre colorée est une encre jaune, ou comprenant en outre (d) une quatrième encre colorée, de préférence une encre noire, comprenant un quatrième véhicule aqueux, un liant, un quatrième colorant et un quatrième β-hydroxyalkyl amidyle, dans lequel le quatrième colorant est soluble ou dispersible dans le quatrième véhicule aqueux, et dans lequel le liant est à au moins 2 pour cent en poids par rapport à l'encre totale.

13. Procédé pour imprimer par jet d'encre sur un substrat, comprenant les étapes consistant:
(a) à fournir une imprimante à jet d'encre qui réagit à des signaux de données numériques;
(b) à charger l'imprimante avec un substrat à imprimer;
(c) à charger l'imprimante avec une encre selon l'une quelconque des revendications 1 à 9, ou un ensemble d'encres pour jet d'encre selon l'une quelconque des revendications 10 à 12; et
(d) à imprimer sur le substrat en utilisant l'encre ou l'ensemble d'encres pour jet d'encre en réponse aux signaux de données numériques.

14. Procédé selon la revendication 13, dans lequel le substrat est un textile.

15. Procédé selon la revendication 14, dans lequel le substrat imprimé est post-traité en chauffant le textile à au moins 125°C pendant au moins 1 minute.

16. Procédé selon la revendication 13, dans lequel le textile imprimé a une résistance au lavage d'au moins 2,5 (telle que mesurée d'après la méthode d'essai AATCC 61-1996 sous l'essai 2A).
